# EUROPEAN PATENT APPLICATION

(11) **EP 1 918 188 A1**
(43) Date of publication of application: **07.05.2008**
(21) Application number: 07019411.3
(22) Date of filing: 04.10.2007
(51) Int. Cl.: B62K 23/06, B62M 25/04

(54) **Control device for a bicycle and relative kit of parts**

(30) Priority: 30.10.2006 IT MI20062081
(71) Applicant: CAMPAGNOLO S.r.l., 36100 Vicenza (VI) (IT)
(72) Inventor: Dal Pra', Giuseppe, 36010 Zané (Vicenza) (IT); De Perini, Bruno, 36075 Montecchio Maggiore-VI (IT)
(74) Representative: Riccardi, Elisa

(57) **Abstract**

A control device (1) for bicycles is described, comprising a main body (2) for attachment to a bicycle handlebar and at least one actuation arm (4, 5, 6) for controlling a brake and/or a derailleur of the bicycle. Said at least one actuation arm (4, 5, 6) comprises a first portion (10) having a finger actuation area (7) and a second portion (11) for controlling the brake and/or the derailleur, said first portion (10) and said second portion (11) being distinct bodies fixable to each other. The first portion (10) can therefore be replaced without disassembling the control device (1), with an identical one when it breaks, wears down or is damaged, or else with a different one in terms of the constituent material, colour or similar, to satisfy the different preferences of the cyclist, or even different in shape and/or size, in particular in curvature and/or length, so that the control device (1) is adaptable to cyclists with hands that depart from average size. To this purpose, a same first portion (10) can also be fixable in at least two different positions (7a, 7b) with respect to the second portion (11).

## Description

The present invention refers to a control device for a bicycle and to a relative kit of parts, more specifically to a control device comprising a main body for attachment to a bicycle handlebar and at least one actuation arm, for controlling at least one equipment of the bicycle.

Such control devices are typically used to control a derailleur, wherein the actuation of one actuation arm or of a pair of actuation arms leads to the displacement of the derailleur over one or more toothed wheels (sprockets) to obtain different gear ratios of the motion from the pedals to the wheel, and/or to control the brake, wherein the actuation of an actuation arm closes the brake jaws on the front or rear wheel rim.

In particular, in so-called "integrated" control devices there are both a brake actuation arm and one or more derailleur actuation arms.

Bicycles often have two integrated control devices arranged, respectively, in proximity to the right and left ends of the handlebars that are gripped by the cyclist. The left integrated control is normally associated with the crankset and allows actuation of the front brake and displacement of a chain derailleur element, commonly called front derailleur, between two or more toothed wheels. The right integrated control is commonly associated with the sprocket assembly connected to the rear wheel, and allows actuation of the rear brake and displacement of a chain derailleur element, or rear derailleur, between the sprockets.

Various types of control devices for bicycles are known.

In mechanical control devices, the or one of the actuation arms controls the displacement of an inextensible cable (Bowden cable) to take the chain to mesh from one crown to the next and/or to close the brake jaws onto the wheel rim.

In electronic control devices, the or one of the actuation arms drives a respective switch open or closed, that is associated with electrical/electronic circuits for controlling the derailleur or the brake.

In hydraulic control devices, the or one of the actuation arms adjusts the flow of a hydraulic actuation fluid of the derailleur or of the brake.

In controls for straight handlebars, the cyclist normally grips the straight end of the handlebars and pulls or pushes one or more actuation arms. The brake actuation arm is typically provided distally, namely on the outside of the handlebars, and is actuated by pulling it towards the handlebars. The actuation arms for controlling the derailleur can be provided in different positions with respect to the handlebars, for example two derailleur actuation arms both below the handlebars, parallel to one another or angularly staggered, or one above and one below the handlebars, etc., and be pushed or pulled.

In controls for curved handlebars, the cyclist can act upon the control actuation arms with the hand arranged in various positions, for example by acting from a first position with the palm of the hand gripping the handlebars, or from a second position with the palm of the hand gripping the main body of the control itself. The brake actuation arm is typically provided distally, on the outside of the handlebars, and it is actuated by pulling it towards the handlebars. The actuation arms for controlling the derailleur can be arranged on the inner side of the main body, or behind the brake actuation arm, in this case having a combined movement for accompanying the brake actuation arm and for actuating the derailleur.

In some known control devices, the actuation arms are levers pivotable with respect to the main body, possibly with a combined movement about more axes. The rotation of each lever or actuation arm is controlled by the cyclist with a finger or with more fingers. In other known control devices, the actuation arms are actuated along substantially linear directions.

The actuation arms of control devices are normally provided with spring return means suitable for taking them back into the normal rest position after their actuation.

In some cases, the derailleur actuation arm can take up different rest positions after actuation, corresponding to the various gear ratios.

In known control devices, each actuation arm is a single body, designed and assembled in the control device so as to have the necessary relationship with the actuation mechanisms of the brake and/or of the derailleur, and so as to provide good manoeuvring conditions.

The technical problem at the basis of the invention is to provide a control device that is more versatile and easier to adapt to various needs of the cyclist.

Such a problem is solved by a control device for bicycles comprising a main body for attachment to a bicycle handlebar and at least one actuation arm for controlling at least one equipment of the bicycle, said at least one actuation arm having a finger actuation area, characterised in that said at least one actuation arm comprises a first portion having said finger actuation area, and a second portion for controlling said at least one equipment, said two portions being distinct bodies fixable to each other.

The first portion can therefore be replaced without disassembling the control device, with an identical one in the case of breaking, wearing down or being damaged, or with a different one in terms of the constituent material, colour or similar, to satisfy the different preferences of the cyclist, or even different in shape and/or size, in particular in curvature and/or length, so that the control device is adaptable to cyclists with hands that depart from average size. Cyclists with larger or smaller than average hands and fingers therefore find actuation more comfortable and can therefore best exploit the performance of the control in terms of actuation of the actuation arms, not being forced, for example, to position the finger(s) in positions not properly centred in the actuation area of a single body actuation arm designed for cyclists with average size hands. In mechanical controls, the suitable positioning of the actuation arm also means that the power transmitted by the finger to the control mechanism of the inextensible cable is maximised.

The actuation arm can be pivotable about one or more axes, in particular about one or more pins fixed in the main body and/or in another actuation arm of the control device, or it can be translatable with respect to the main body.

Preferably said first portion is fixable in at least two different positions with respect to said second portion.

In this way it is possible to mount the second portion with respect to the main body in a suitable manner to control said at least one equipment, and instead mount the first portion so that the finger actuation area is in the most suitable position for the cyclist's hand.

This is particularly advantageous in the case of mechanical control devices where it is necessary to respect the direction of the traction cable and/or where there are indexing mechanisms. The design, mounting and adjustment of the second portion can therefore be independent of the size of the cyclist's hand, while the mounting and/or adjustment of the first portion, not being critical, can also be carried out by the cyclist himself/herself, so that the area of the actuation arm intended for actuation is in the optimal position with respect to the main body of the control and therefore with respect to the handlebars, in particular in the or in every rest position of the actuation arm.

Preferably, said at least two positions differ in mutual angulation of the first and of the second portion.

Alternatively or in addition, said at least two positions of said first portion with respect to said second portion are translated with respect to each another.

In a first embodiment, said at least two different positions are obtained by said first and said second portion having two facing coupling surfaces that are grooved, preferably two substantially circular coupling surfaces provided with radial grooves, or two coupling surfaces provided with parallel grooves.

Advantageously, the geometry and in particular the pitch of the grooves can be selected to provide a desired plurality of mutual positions of the first and of the second portion.

In a second embodiment, said at least two different positions are obtained by said first and said second portion having two facing coupling surfaces that are substantially flat friction surfaces.

Advantageously, the two portions can therefore be fixed substantially in any mutual position.

The means for fixing the two portions preferably comprise a screw extending between two holes respectively formed in the two portions.

In an embodiment, said at least one actuation arm controls the displacement in one direction of a derailleur.

In another embodiment, said at least one actuation arm controls the displacement in both directions of a derailleur.

In another embodiment, said at least one actuation arm controls a brake.

In another embodiment, said at least one actuation arm controls the displacement in one direction of a derailleur, and a brake.

In an embodiment, said second portion or control portion directly or indirectly actuates a traction cable of a mechanical equipment.

In another embodiment, said second portion drives at least one switch of an electrical or electronic equipment open and closed.

In another embodiment, said second portion regulates the flow of a fluid of a hydraulic equipment.

In an embodiment, the main body is shaped for attachment to a straight handlebar.

In another embodiment, the main body is shaped for attachment to a curved handlebar.

In the various embodiments described above, said at least one actuation arm can be actuatable into rotation or into translation with respect to the main body.

The first and the second portion of said at least one actuation arm can be made of different materials, for example by providing a first portion in lighter material, more comfortable to the touch and/or that provides a better grip.

In a second aspect thereof, the invention concerns a kit of parts comprising (i) a control device for bicycles comprising a main body for attachment to a bicycle handlebar, and at least one actuation arm for controlling at least one equipment of the bicycle, said at least one actuation arm comprising a first portion having a finger actuation area and a second portion for controlling said at least one equipment, said two portions being distinct bodies fixable to each other, and (ii) at least one further first portion.

Said at least one further first portion can be identical with said first portion or differ from said first portion in constituent material, colour, shape and/or size, in particular in curvature and/or in length.

The materials can be different for example in weight and/or tactual feeling.

The invention shall now be better described with reference to some embodiments thereof, illustrated merely as a non-limiting example in the attached drawings, wherein:
- fig. 1 shows an isometric view of a first right integrated control device for straight handlebars according to the present invention;
- fig. 2 shows a bottom view of the control device of fig. 1, with two possible different rest positions of the various actuation arms highlighted;
- fig. 3 shows an exploded view of a first embodiment of the upshift actuation arm of the rear derailleur of the control device of fig. 1;
- fig. 4 shows an exploded view of a second embodiment of the upshift actuation arm of the rear derailleur of the control device of fig. 1;
- fig. 5 shows an exploded view of a first embodiment of the brake actuation arm of the control device of fig. 1;
- fig. 6 shows an exploded view of another embodiment of the brake actuation arm of a control device according to the invention;
- fig. 7 shows an isometric view of another right integrated control device for straight handlebars according to the present invention, partially exploded;
- fig. 8 shows an isometric view of yet another right integrated control device for straight handlebars according to the present invention, partially exploded;
- fig. 9 shows an isometric view of a right integrated control device for curved handlebars according to the present invention, with three possible different positions of the upshift actuation arm of the rear derailleur highlighted;
- fig. 10 shows an exploded view of the upshift actuation arm of the rear derailleur of the control device of fig. 9; and
- fig. 11 shows an isometric view of another right integrated control device for curved handlebars according to the present invention, with two possible different positions of the upshift actuation arm of the rear derailleur highlighted.

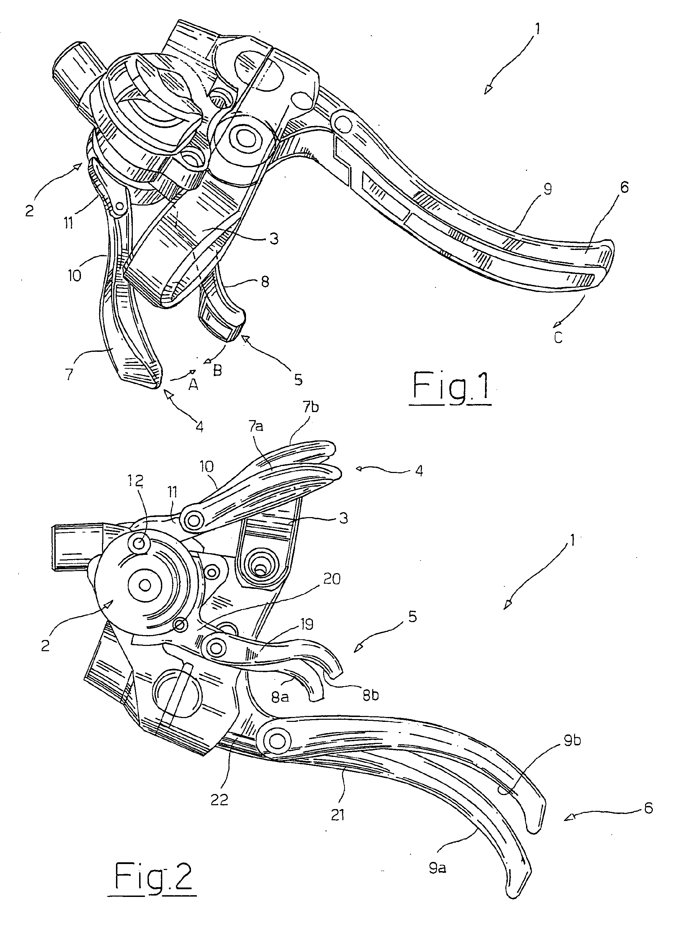

In Figures 1 and 2 a first control device 1 according to the invention is shown. The control device 1 is an integrated control device for straight handlebars.

The control device 1 comprises a main body 2 that can be attached to the handlebars of a bicycle in a conventional manner, for example through a clamp 3.

The control device 1 further comprises two arms 4, 5 for controlling a derailleur, upshifting and downshifting, respectively, and an arm 6 for controlling a brake. In the case of the right integrated control device shown, these are in particular the rear brake and the rear derailleur. The actuation arms 4, 5 and 6 are pivotable in actuation with respect to the main body 2, respectively in the direction of the arrows A, B, C, about respective hinge axes. Spring return means, not shown and of the known type, take the actuation arms 4, 5 and 6 back into the or, respectively, every rest position after their actuation.

The actuation of the brake and gearshifting commands established with the rotation of the actuation arms 4, 5, 6 can occur in any *per* se well known way, for example through a pair of inextensible sheathed cables, through a hydraulic circuit or through an electric/electronic circuit. The necessary mechanics, electronics or hydraulic components are housed in the main body 2.

The actuation arm 4, indicated as upshift actuation arm or lever hereinafter, but that could vice-versa be the downshift actuation arm or lever, is in a position such as to be arranged below the handlebars on the proximal side for actuation by pushing - namely away from the cyclist - with the thumb, while the actuation arm 5, indicated as downshift actuation arm hereinafter, but that could vice-versa be the upshift actuation arm, is in a position such as to be arranged below the handlebars on the distal side for actuation by pulling - namely towards the cyclist - with the index finger, the middle finger, the ring finger and/or the little finger. The brake actuation arm 6 is arranged on the distal side of the handlebars, for actuation by pulling with one or more of the four fingers other than the thumb.

Each arm 4, 5, 6 therefore comprises a finger actuation area, respectively indicated with 7, 8, 9.

According to the present invention, the position of at least one of the actuation areas 7, 8, 9 with respect to the main body 2 - and therefore with respect to the bicycle handlebars - is adjustable to best adapt to the size of the cyclist's hands. Figure 2 shows, by way of examples, two different positions of the actuation area 7, respectively indicated with 7a and 7b, with the upshift actuation arm 4 in the or in a specific rest position, as shall become clearer hereafter. Again by way of examples, two different positions of the actuation area 8 are shown, respectively indicated with 8a and 8b, with the downshift actuation arm 5 in the or in a specific rest position, and two different positions of the actuation area 9, respectively indicated with 9a and 9b, with the brake actuation arm 6 in the or in a specific rest position. The positions indicated with letter a are suitable for cyclists with larger hands, while the positions indicated with letter b are suitable for cyclists with smaller hands.

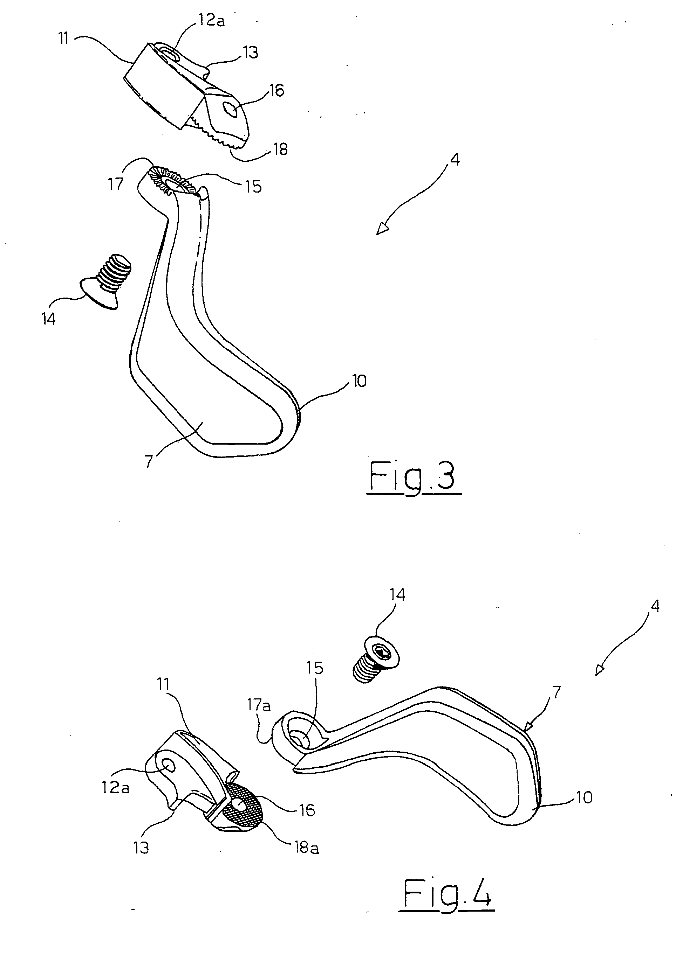

Also with reference to fig. 3, the upshift actuation arm 4 indeed comprises a first portion 10 having said actuation area 7, and a second portion 11 strictly for controlling the derailleur, pivotable with respect to the main body 2 about a pin 12 extending in a hole 12a of the actuation arm 4.

In the case shown, the second portion or control portion 11 comprises a tooth 13 forming part of a ratchet indexing mechanism for controlling the displacement of the inextensible cable of the derailleur. It should be understood that the second portion 11 shall have suitable means for controlling a switch or a flow regulator, respectively, in the case of an electrical/electronic control device and in the case of a hydraulic control device.

According to an advantageous aspect of the invention, the or every rest position, and therefore also the or every actuation position, of the control portion 11 of the actuation arm 4 is univocally defined.

The first portion 10, on the other hand, is fixable to the second portion 11 in different positions, which differ in mutual angulation of the portions 10, 11. More specifically, the first portion 10 is fixable to the second portion 11 through a screw 14 - or other suitable fixing means - arranged through a hole 15 of the first portion 10 and screwed into a threaded hole 16 of the second portion 11. The coupling surfaces 17, 18, respectively of the first and second portion 10, 11 of the actuation arm 4, about the holes 15, 16, are substantially circular and provided with radial grooves. The geometry of the grooves of the coupling surfaces 17, 18 and in particular the pitch of the grooves are selected so as to allow and define at least two and preferably a plurality of mutual positions or angulations of the two portions 10, 11 of the actuation arm 4.

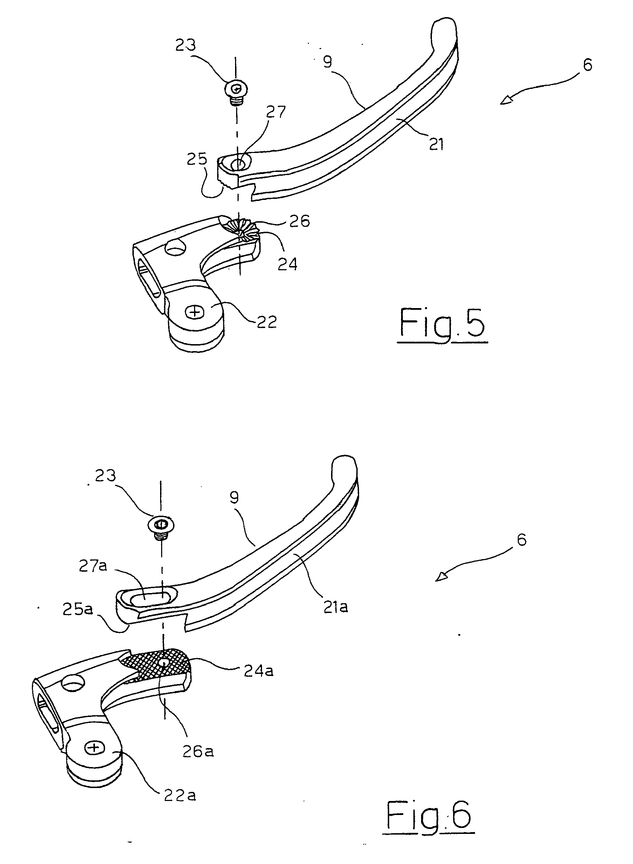

Figure 4 shows an embodiment of the actuation arm 4 wherein the coupling surfaces, indicated there with 17a and 18a, are substantially flat friction surfaces. In this case it is possible to even more finely adjust the position or angulation of the first portion 10 of the actuation arm 4 with respect to the second portion 11, and therefore with respect to the main body 2 of the control device and, ultimately, with respect to the handlebars.

The downshift actuation arm 5 also comprises two portions 19, 20 that are fixable according to two or more different mutual positions, in a totally similar manner to what has been described with reference to the upshift actuation arm 4.

In a totally similar way, the brake actuation arm 6 comprises, as shown in figure 5, a first portion 21 having said finger actuation area 9 and a second portion 22 for controlling the brake, for example for traction of an inextensible cable. The first portion 21 is fixable through a screw 23 - or another suitable fixing means - to the second portion 22 in different positions, allowed and defined by substantially circular grooved coupling surfaces 24, 25 extending about the holes 26, 27 for receiving the screw 23. In an alternative embodiment, friction coupling surfaces could be provided.

In the embodiment of the brake actuation arm 6 illustrated in fig. 6, the two portions of actuation arm indicated there with 21a and 22a are fixable in different positions that differ in the amount that the first portion 21a projects from the second portion 22a. The screw 23 is indeed received in a threaded hole 26a in the second portion and in a slot 27a of the first portion 21a.

It should be understood that in the embodiment of fig. 6, the mutual angulation of the portions 21a, 22a of actuation arm can be variable, by providing substantially flat friction coupling surfaces 24a, 25a as shown, or fixed, for example by providing a series of parallel grooves in the coupling surfaces 24a, 25a.

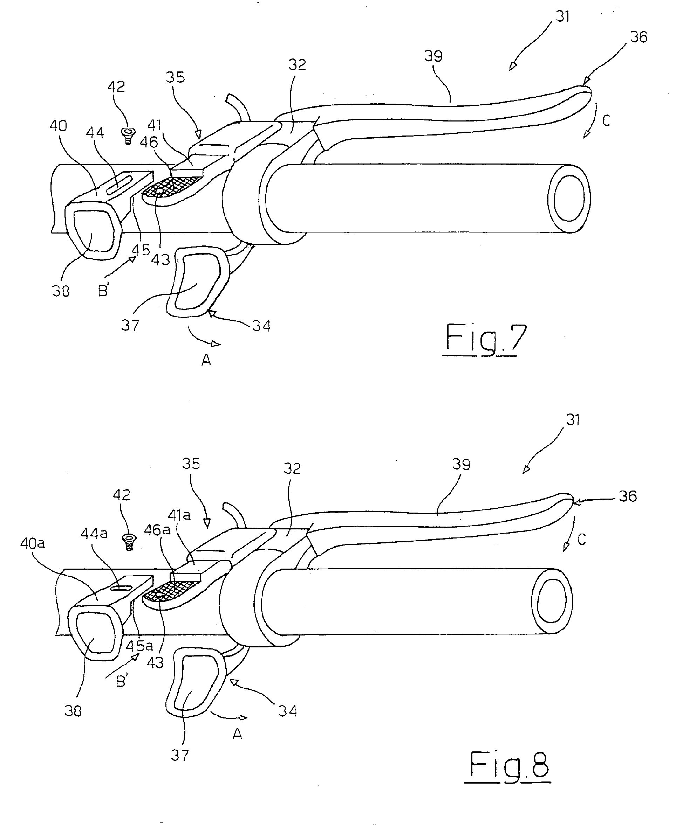

Figure 7 shows a control device 31 for straight handlebars wherein the actuation arm 34, indicated as upshift actuation arm hereinafter, but which could vice-versa be the downshift actuation arm, is in such a position as to be arranged below the handlebars on the proximal side, while the actuation arm 35, indicated as downshift actuation arm hereinafter, but which could vice-versa be the upshift actuation arm, is in such a position as to be arranged above the handlebars on the proximal side. Both actuation arms 34, 35 are arranged to be actuated by pushing with the thumb, at respective actuation areas 37, 38. While the upshift actuation arm 34 is pivotable in actuation with respect to the main body 2 along the direction A, the downshift actuation arm 35 is configured to have a linear actuation along the direction B'. The brake actuation arm 36 is arranged on the distal side of the handlebars, and is pivotable with respect to the main body 32 along the direction C when actuated by pulling with one or more of the four fingers other than the thumb along the actuation area 39.

The downshift actuation arm 35 comprises two actuation arm portions 40, 41 that are fixable in different positions that differ in the amount that the first portion 40 projects from the second portion 41. A fixing screw 42 is indeed received in a threaded hole 43 in the second portion 41 and in a slot 44 of the first portion 40. The slot 44 extends in the direction B' and therefore allows the actuation area 38 of the downshift actuation arm 35 to be moved towards and away from the cyclist, to adapt the actuation arm to the size of the hands. The threaded hole 43 and the slot 44 are respectively made in coupling areas 45, 46 that can for example be substantially flat friction surfaces or grooved surfaces with grooves parallel to one another and perpendicular to direction B'.

It should be understood that in the control device 31, the actuation arms 34 and 39 could also be adjustable similarly to what has been described with reference to the control device 1.

In the control device 31 for straight handlebars of fig. 8, which as for the rest is identical with the device 31 of fig. 7, the slot 44a of the first portion 40a of the downshift actuation arm 35 instead extends in a direction substantially perpendicular to the direction B', substantially parallel to the handlebars. The actuation area 38 of the downshift actuation arm 35 can therefore be moved towards or away from the grip of the handlebars along the direction defined by the handlebars, to adapt the control device to the size of the cyclist's hands.

In yet other embodiments of the control device for straight handlebars according to the invention (not shown), both actuation arms could be in such positions as to be arranged below the handlebars on the proximal side, one beneath the other, both to be actuated by pushing with the thumb.

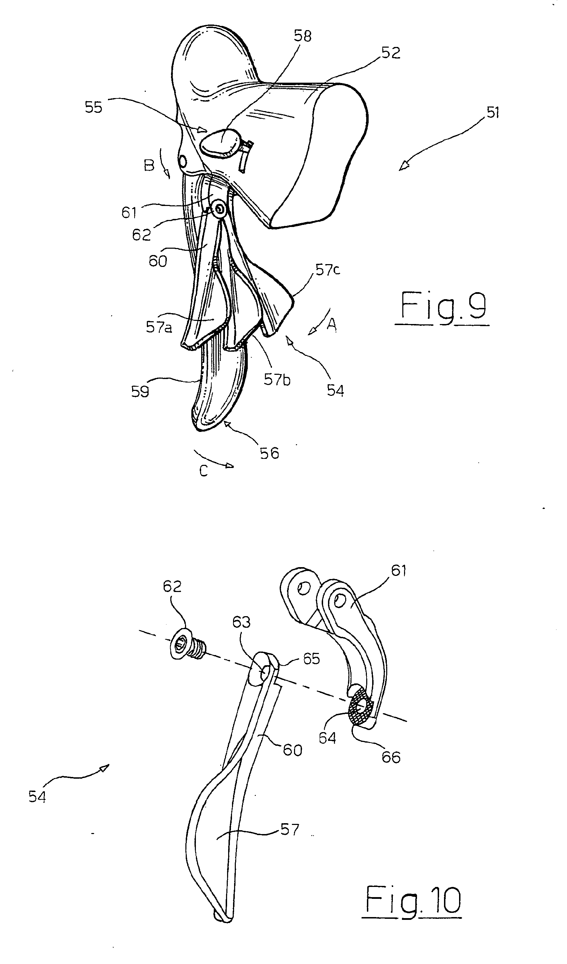

In Figure 9 a control device according to the invention of the integrated type for curved handlebars is shown.

The control device 51 comprises a main body 52 that is fixable to the handlebars of a bicycle, two actuation arms 54, 55 for controlling a derailleur, upshifting and downshifting respectively or vice-versa, and an actuation arm 56 for controlling a brake. The actuation arms 54, 55 and 56 are pivotable in actuation with respect to the main body 52, respectively in the direction of the arrows A, B, C. The downshift actuation arm 55 is in such a position as to be on the inside of the main body 2 for actuation by pushing downwards with the thumb. The brake actuation arm 56 is in such a position as to be substantially parallel to the convexity of the end of the handlebars, to be actuated by pulling with one or more fingers other than the thumb. The upshift actuation arm 54 is arranged behind the brake actuation arm 56 and accompanies it in the braking movement, while it is actuated by pushing it in the direction A towards the inside of the handlebars with one or more fingers other than the thumb.

The position with respect to the main body 52 - and therefore with respect to the bicycle handlebars - of at least one of the actuation areas 57, 58, 59 respectively of the actuation arms 54, 55, 56 is adjustable to best adapt to the size of the cyclist's hands. Figure 9 illustrates, by way of examples, three different positions of the actuation area 57, respectively indicated with 57a, 57b and 57c, with the upshift actuation arm 54 in the or in a specific rest position.

The position 57b is suitable for cyclists with average sized hands, the position 57a is suitable for cyclists with larger hands and in particular with longer fingers, while the position 57c is suitable for cyclists with smaller hands and in particular with shorter fingers.

Also with reference to fig. 10, the upshift actuation arm 54 comprises a first portion 60 having said actuation area 57, and a second portion 61 strictly for controlling the derailleur. The first portion 60 is fixable to the second portion 61 in positions that differ in mutual angulation through a screw 62 - or other suitable fixing means - arranged through a hole 63 of the first portion 60, and screwed into a threaded hole 64 of the second portion 61. The mutual coupling surfaces 65, 66 of the two portions 60, 61 of the actuation arm 54 are friction surfaces or are provided with substantially circular radial grooves.

The screw 62 and the axes of the holes 63, 64 extend in a direction substantially parallel to the axis A of the actuating rotation of the upshift actuation arm 54. Therefore, the actuation area 57 of the upshift actuation arm 54 can be moved towards or away from the outside of the handlebars, from where it is pushed.

It should be understood that, as an alternative or in addition, it is possible to provided an adjustment of the upshift actuation arm 54 obtained by translation, similarly to what has been illustrated with reference to figs. 6, 7, 8. Moreover, the downshift actuation arm 55 and/or the brake actuation arm 56 can also comprise two portions each, fixable according to two or more different mutual positions, in a totally similar way to what has been described above.

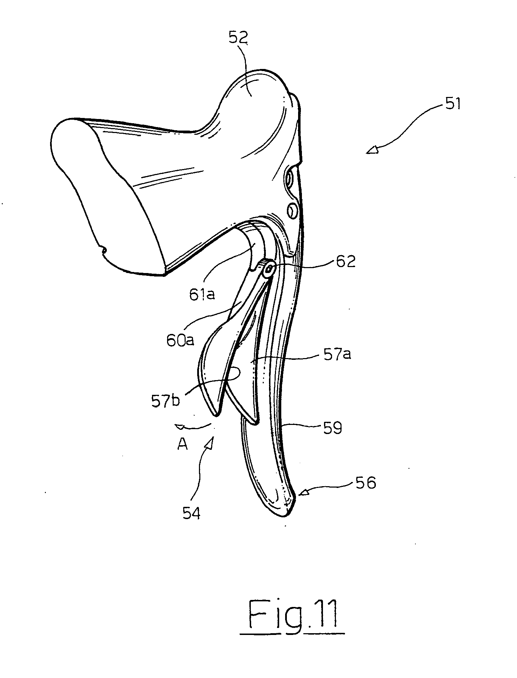

In the control device 51 for curved handlebars of fig. 11, which as for the rest is identical with the device 51 of fig. 10, the screw 62 and the axes of the holes 63, 64 of the two actuation arm portions 60a, 61a instead extend in a direction perpendicular to the axis A of actuating rotation of the upshift actuation arm 54. The actuation area 57 of the upshift actuation arm 54 can therefore be moved towards or away from the grip of the handlebars, again to adapt the control device to the size of the cyclist's hands.

In a control device according to the invention, the two portions of an actuation arm or of each actuation arm can also be fixable in a single mutual position, for example by replacing the radial and parallel grooves of the coupling areas described above with non-repetitive surface structurings, by providing abutments that prevent the rotation or sliding between the two portions, by providing a pair of screws instead of a single screw or with other means that shall be manifest to those skilled in the art.

The provision of the two portions of actuation arm is, however, advantageous for the reasons outlined in the introductory part of the present description, namely to be able to replace the first portion without disassembling the control device, with an identical one in case it breaks, wears down or gets damaged, or with a different one in terms of constituent material, colour or similar, to satisfy the different preferences of the cyclist, or even different in shape and/or size, in particular in curvature and/or length, so that the control device is adaptable to cyclists with hands that depart from average size.

The two portions of actuation arm can be made of the same material, or of different materials, for example by providing a first portion in lighter material, more comfortable to the touch and/or that provides a better grip.

According to the invention, a kit comprising a control device according to any of the embodiments described above and at least one further replacement first portion is also provided.

Said at least one further first portion can be identical with the first portion and be used in the case the first portion breaks, is damaged or wears down.

Said at least one further first portion can also differ from the first portion in constituent material, colour, shape and/or size, in particular in curvature and/or in length.

The materials can be different for example in weight and/or tactual feeling.

The specific configuration of the control devices and in particular of their main bodies and of their actuation arms shown in the drawings and described above must be taken as a non-limiting example of the scope of the invention.

In particular it should be understood that the invention is also applicable to the case of non-integrated control devices, comprising only the brake actuation arm or only one or two arms for controlling a derailleur; to control devices wherein there is a single actuation arm for controlling a derailleur, having a plurality of rest positions each corresponding to a transmission ratio; to control devices having a single arm with double movement for controlling the brake and for one direction of gearshifting of the derailleur.

Finally, as already made clear, the invention is applicable to any type of control device, electrical/electronic, hydraulic or mechanical and, amongst mechanical devices, to any type of gearshift and in particular of indexing mechanism, be it of the release type or of the active control type in both directions of gearshifting.

## Claims

1. Control device (1; 31; 51) for bicycles comprising a main body (2; 32; 52) for attachment to a bicycle handlebar and at least one actuation arm (4, 5, 6; 34, 35, 36; 54, 55, 56) for controlling at least one equipment of the bicycle, said at least one actuation arm (4, 5, 6; 34, 35, 36; 54, 55, 56) having a finger actuation area (7, 8, 9; 37, 38, 39; 57, 58, 59), **characterised in that** said at least one actuation arm (4, 5, 6; 34, 35, 36; 54, 55, 56) comprises a first portion (10, 19, 21, 21a; 40, 40a; 60) having said finger actuation area (7, 8, 9; 37, 38, 39; 57, 58, 59), and a second portion (11, 20, 22, 22a; 41, 41a; 61) for controlling said at least one equipment, said two portions being distinct bodies fixable to each other.

2. Control device (1; 31; 51) according to claim 1, **characterised in that** said first portion (10, 19, 21, 21a; 40, 40a; 60) is fixable (14; 23, 42, 62) in at least two different positions with respect to said second portion (11, 20, 22, 22a; 41, 41a; 61).

3. Control device (1; 31; 51) according to claim 2, **characterised in that** said at least two positions differ in mutual angulation of the first portion (10, 19, 21, 21a; 40, 40a; 60) and of the second portion (11, 20, 22, 22a; 41, 41a; 61).

4. Control device (1; 31; 51) according to claim 2 or 3, **characterised in that** said at least two positions of said first portion (21a; 40, 40a) with respect to said second portion (22a; 41, 41a) are translated with respect to each other.

5. Control device (1; 31; 51) according to any of claims 2-4, **characterised in that** said first portion (10) and said second portion (11) have two facing coupling surfaces (17, 18) that are grooved.

6. Control device (1; 31; 51) according to claim 5, **characterised in that** said coupling surfaces (17, 18) are substantially circular and provided with radial grooves.

7. Control device (1; 31; 51) according to claim 5, **characterised in that** said coupling surfaces (17, 18) are provided with parallel grooves.

8. Control device (1; 31; 51) according to any of claims 2-4, **characterised in that** said first portion (10, 21, 21a; 40, 40a; 60) and said second portion (11, 22, 22a; 41, 41a; 61) have two facing coupling surfaces (17a, 18a, 24, 25, 24a, 25a, 45, 46, 45a, 46a; 65, 66) that are substantially flat friction surfaces.

9. Control device (1; 31; 51) according to any of the previous claims, **characterised in that** said at least one actuation arm (4, 5; 34, 35; 54, 55) controls the displacement in one direction of a derailleur.

10. Control device (1; 31; 51) according to any of claims 1-8, **characterised in that** said at least one actuation arm controls the displacement in both directions of a derailleur.

11. Control device (1; 31; 51) according to any of claims 1-8, **characterised in that** said at least one actuation arm (6; 36; 56) controls a brake.

12. Control device (1; 31; 51) according to any of claims 1-8, **characterised in that** said at least one actuation arm controls the displacement in one direction of a derailleur, and a brake.

13. Control device (1; 31; 51) according to any of the previous claims, **characterised in that** said second portion (11, 20, 22, 22a; 41, 41a; 61) directly or indirectly actuates a traction cable of a mechanical equipment.

14. Control device (1; 31; 51) according to any of claims 1-12, **characterised in that** said second portion (11, 20, 22, 22a; 41, 41a; 61) drives at least one switch of an electrical or electronic equipment open and closed.

15. Control device (1; 31; 51) according to any of claims 1-12, **characterised in that** said second portion (11, 20, 22, 22a; 41, 41a; 61) regulates the flow of a fluid of a hydraulic equipment.

16. Control device (1; 31) according to any of the previous claims, **characterised in that** the main body (2; 32) is shaped for attachment to a straight handlebar.

17. Control device (51) according to any of claims 1-15, **characterised in that** the main body (52) is shaped for attachment to a curved handlebar.

18. Control device (1; 31; 51) according to any of the previous claims, **characterised in that** said at least one actuation arm (4, 5, 6; 34, 36; 54, 55, 56) is actuatable into rotation with respect to the main body (2; 32; 52).

19. Control device (1; 31; 51) according to any of claims 1-16, **characterised in that** said at least one actuation arm (35) is actuatable into translation with respect to the main body (2; 32; 52).

20. Control device (1; 31; 51) according to any of the previous claims, **characterised in that** said first portion (10, 19, 21, 21a; 40, 40a; 60) and said second portion (11, 20, 22, 22a; 41, 41a; 61) are made of different materials.

21. Kit of parts comprising (i) a control device (1; 31; 51) for bicycles comprising a main body (2; 32; 52) for attachment to a bicycle handlebar, and at least one actuation arm (4, 5, 6; 34, 35, 36; 54, 55, 56) for controlling at least one equipment of the bicycle, said at least one actuation arm (4, 5, 6; 34, 35, 36; 54, 55, 56) comprising a first portion (10, 19, 21, 21a; 40, 40a; 60) having a finger actuation area (7, 8, 9; 37, 38, 39; 57, 58, 59) and a second portion (11, 20, 22, 22a; 41, 41a; 61) for controlling said at least one equipment, said portions being two distinct bodies fixable to each other, and (ii) at least one further first portion (10, 19, 21, 21a; 40, 40a; 60).

22. Kit of parts according to claim 21, wherein said at least one further first portion (10, 19, 21, 21a; 40, 40a; 60) is identical with said first portion (10, 19, 21, 21a; 40, 40a; 60).

23. Kit of parts according to claim 21, wherein said at least one further first portion (10, 19, 21, 21a; 40, 40a; 60) differs from said first portion (10, 19, 21, 21a; 40, 40a; 60) in constituent material.

24. Kit of parts according to claim 21 or 23, wherein said at least one further first portion (10, 19, 21, 21a; 40, 40a; 60) differs from said first portion (10, 19, 21, 21a; 40, 40a; 60) in colour.

25. Kit of parts according to any of claims 21, 23, 24, wherein said at least one further first portion (10, 19, 21, 21a; 40, 40a; 60) differs from said first portion (10, 19, 21, 21a; 40, 40a; 60) in shape and/or size.

26. Kit of parts according to claim 25, wherein said at least one further first portion (10, 19, 21, 21a; 40, 40a; 60) differs from said first portion (10, 19, 21, 21a; 40, 40a; 60) in curvature.

27. Kit of parts according to claim 25 or 26, wherein said at least one further first portion (10, 19, 21, 21a; 40, 40a; 60) differs from said first portion (10, 19, 21, 21a; 40, 40a; 60) in length.
